# Europäisches Patentamt

# European Patent Office

# Office européen des brevets

(19)

(11) Veröffentlichungsnummer: **0 023 191**
**B1**

(12) ## EUROPÄISCHE PATENTSCHRIFT

(45) Veröffentlichungstag der Patentschrift:
09.02.83

(51) Int. Cl.³: **C 09 B  5/62,** C 09 B  67/48,
C 09 B  67/14

(21) Anmeldenummer: **80810215.6**

(22) Anmeldetag: **30.06.80**

(54) Modifikation des Perylentetracarbonsäure-bis-(3,5-dimethyl-phenyl)-imids, dessen Herstellung und Verwendung beim Pigmentieren.

(30) Priorität: **04.07.79 CH 6242/79**
**05.07.79 CH 6293/79**

(43) Veröffentlichungstag der Anmeldung:
**28.01.81 Patentblatt 81/4**

(45) Bekanntmachung des Hinweises auf die Patenterteilung:
**09.02.83 Patentblatt 83/6**

(84) Benannte Vertragsstaaten:
**CH DE FR GB IT LI**

(56) Entgegenhaltungen:
**DE-A-2 139 688**
**DE-B-1 067 157**
**CHEMICAL ABSTRACTS, Band 84, Nr. 24, 14. Juni
1976, Seite 82, Nr. 166 251 s Columbus, Ohio,
U.S.A.**

(73) Patentinhaber: **CIBA-GEIGY AG, Patentabteilung
Postfach, CH-4002 Basel (CH)**

(72) Erfinder: **Bäbler, Fridolin, Dr., Nussbaumweg 19,
CH-4123 Allschwil (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Modifikation des Perylentetracarbonsäure-bis-(3,5-dimethyl-phenyl)-imids, dessen Herstellung und Verwendung beim Pigmentieren

In der DE-B-1 067 157 ist die Herstellung des Perylentetracarbonsäure-bis-(3,5-dimethylphenyl)-imides durch Kondensation des Perylentetracarbonsäuredianhydrides mit 3,5-Dimethylanilin und konz. Salzsäure beschrieben. Die nach diesem Verfahren erhältliche gelbstichig rote α-Modifikation zeigt folgendes Röntgenbeugungsdiagramm:

| Linie | Netzebenenabstand (d) in Ångström | Intensität |
|---|---|---|
| 1 | 16,9 | stark |
| 2 | 8,6 | mittel |
| 3 | 7,8 | sehr schwach |
| 4 | 7,5 | sehr schwach |
| 5 | 6,2 | sehr stark |
| 6 | 5,87 | schwach |
| 7 | 4,69 | stark |
| 8 | 4,54 | mittel |
| 9 | 4,23 | sehr schwach |
| 10 | 4,14 | schwach |
| 11 | 3,83 | stark |
| 12 | 3,72 | mittel |
| 13 | 3,64 | stark |
| 14 | 3,44 | sehr stark |
| 15 | 3,16 | stark |
| 16 | 3,10 | schwach |
| 17 | 3,05 | sehr schwach |

Zur Bestimmung der Netzebenenabstände (d-Werte) wurde das Beugungsbild auf Film registriert (Film 235-79 und 236-79). Zur Aufnahme diente eine Guinier-DeWolff Nr. 2 Kamera mit Cu-K-Alpha-Strahlung (Lambda = 1.54178 Angström). Als Eichsubstanz wurde Alpha-Quarz verwendet. Dessen d-Werte sind aus A = 4.913 Angström und C = 5.405 Angström (PDF-0490) berechnet. Die relativen Linienintensitäten sind visuell geschätzt.

In der Japanischen Offenlegungsschrift 51/7025 ist die β-Modifikation des Perylentetracarbonsäure-bis-(3,5-dimethylphenyl)-imides beschrieben. Diese wird erhalten durch Behandeln der durch Umlösen aus konzentrierter Schwefelsäure anfallenden α-Mod. mit inerten hochsiedenden organischen Lösungsmitteln. Das Röntgenbeugungsspektrum zeigt folgende Zusammensetzung:

| Linie | d (Å) | Intensität |
|-------|-------|------------|
| 1 | 15,8 | mittel |
| 2 | 11,1 | schwach |
| 3 | 9,5 | stark |
| 4 | 7,83 | mittel |
| 5 | 6,51 | schwach |
| 6 | 6,07 | schwach |
| 7 | 5,57 | schwach |
| 8 | 4,93 | schwach |
| 9 | 4,53 | schwach |
| 10 | 4,27 | mittel |
| 11 | 4,10 | schwach |
| 12 | 3,97 | schwach |
| 13 | 3,88 | schwach |
| 14 | 3,74 | schwach |
| 15 | 3,66 | mittel |
| 16 | 3,55 | mittel |
| 17 | 3,39 | schwach |
| 18 | 3,30 | schwach |
| 19 | 3,23 | schwach |

Es wurde nun eine weitere Modifikation des Perylentetracarbonsäure-bis-(3,5-dimethylphenyl)-imids gefunden, die in Anlehnung an die obigen Publikationen als $\gamma$-Modifikation bezeichnet wird, und welche durch folgendes Röntgenbeugungsspektrum charakterisiert ist:

| Linie | Netzebenenabstand d in Ångström | Intensität |
|---|---|---|
| 1 | 17,2 | stark |
| 2 | 10,3 | stark |
| 3 | 9,8 | mittel |
| 4 | 8,3 | sehr stark |
| 5 | 7,2 | stark |
| 6 | 6,7 | stark |
| 7 | 6,2 | sehr schwach |
| 8 | 6,1 | sehr schwach |
| 9 | 5,55 | mittel |
| 10 | 5,29 | schwach |
| 11 | 5,09 | mittel |
| 12 | 4,83 | sehr schwach |
| 13 | 4,64 | schwach |
| 14 | 4,49 | schwach |
| 15 | 4,34 | schwach |
| 16 | 4,27 | schwach |
| 17 | 4,09 | stark |
| 18 | 3,90 | mittel |
| 19 | 3,84 | mittel |
| 20 | 3,74 | schwach |
| 21 | 3,61 | sehr stark |
| 22 | 3,54 | schwach |
| 23 | 3,46 | sehr stark |
| 24 | 3,38 | sehr schwach |
| 25 | 3,30 | sehr stark |
| 26 | 3,21 | mittel |
| 27 | 3,16 | sehr schwach |
| 28 | 3,10 | sehr schwach |
| 29 | 3,04 | sehr schwach |

Je nach Kristallinität können schwache Linien diffus werden oder verschwinden.
Die neue $\gamma$-Modifikation, welche sich gegenüber den bisher bekannten Modifikationen durch eine deutliche und für die koloristische Anwendung interessante Farbtonverschiebung vom gelbstichigen zum blaustichigen Rot unter Beibehaltung der guten Pigmenteigenschaften auszeichnet, kann man in direkter Synthese durch Kondensation des Perylentetracarbonsäuredianhydrids in einem Überschuß an 3,5-Dimethylanilin unter Abwesenheit eines inerten organischen Lösungsmittels aber in Gegenwart eines Kondensationsmittels, insbesondere eines Cadmium- oder Zinksalzes einer organischen Säure, bevorzugt Zinkacetat oder Zinkformiat, erhalten.

Die Kondensation erfolgt durch Erhitzen der Komponenten, zweckmäßig auf 180 bis 220°, wobei das bei der Kondensation entstehende Wasser abdestilliert wird. Die Aufarbeitung erfolgt vorteilhaft durch Zugabe von Alkohol zum abgekühlten Reaktionsgemisch, Abfiltrieren der Pigmentsuspension und Entfernung des überschüssigen Amins durch Waschen mit verdünnter Salzsäure.

Zur neuen $\gamma$-Form gelangt man auch durch Behandeln der bekannten $\alpha$- und/oder $\beta$-Form mit Trifluoressigsäure.

Dabei wird z. B. die $\alpha$-Form in reiner Trifluoressigsäure oder in Mischung mit aprotischen organischen Lösungsmitteln, beispielsweise aromatischen Kohlenwasserstoffen wie Toluol, oder Halogenkohlenwasserstoffen wie Chlorbenzol oder o-Dichlorbenzol bei Rückflußtemperatur während einiger Stunden verrührt und das Pigment in der neuen $\gamma$-Modifikation durch Abfiltrieren der Suspension isoliert. Bei Verwendung von reiner Trifluoressigsäure kann das Pigment nach erfolgter Modifikationsumwandlung in die neue $\gamma$-Form durch direktes Abdampfen der Trifluoressigsäure oder durch Verdünnen der Pigmentsuspension mit Wasser oder einem organischen Lösungsmittel wie Methanol, Äthanol, Isopropanol, und Abfiltrieren isoliert werden.

Die neue $\gamma$-Modifikation des Perylentetracarbonsäure-bis-(3,5-dimethylphenyl)-imids zeichnet sich durch hohe Farbstärke, ausgezeichnete Hitze- und Lichtechtheit sowie durch eine wertvolle blaustichigrote Nuance aus, die ihren Einsatz anstelle der hochechten Cd-Pigmente ermöglicht. Im Gegensatz zur $\alpha$- und $\beta$-Modifikation lassen sich mit der neuen $\gamma$-Modifikation ohne spezielle Nachbehandlungen PE-Spritzgußartikel verzugsfrei einfärben. Zudem lassen sich in Mischung mit andern Pigmenten Nuancen einstellen, welche weder mit der $\alpha$-Modifikation noch mit der $\beta$-Modifikation erhalten werden können.

Die neue $\gamma$-Modifikation eignet sich zum Pigmentieren von hochmolekularem organischem Material, thermoplatischen und duromeren Kunststoffen, wie Celluloseäther und -ester, wie Äthylcellulose, Nitrocellulose, Celluloseacetat, Cellulosebutyrat, natürliche Harze oder Kunstharze, wie Polymerisationsharze oder Kondensationsharze, z. B. Aminoplaste, insbesondere Harnstoff- und Melamin-Formaldehydharze, Alkydharze, Phenoplaste, Polycarbonate, Polyoldefine, wie Polystyrol, Polyvinylchlorid, Polyäthylen, Polypropylen, Polyacrylnitril, Polyacrylsäureester, Polyamiden, Polyurethanen oder Polyester, Gummi, Casein, Silikon und Silikonharzen einzeln oder in Mischungen.

Die erwähnten hochmolekularen Verbindungen können sowohl als plastische Massen, Schmelzen oder in Form von Spinnlösungen, Lacken, Anstrichstoffen oder Druckfarben vorliegen. Je nach Verwendungszweck erweist es sich als vorteilhaft, die neuen Pigmente als Toner oder in Form von Präparaten zu verwenden.

Mit der neuen $\gamma$-Modifikation lassen sich je nach Größe der Pigmentkristalle hochtransparente oder deckende Färbungen herstellen. So kann zum Beispiel durch Mahlen oder Kneten das Pigment in eine feinere Form, durch Behandlung mit organischen Lösungsmitteln in An- oder Abwesenheit von Wasser, vorzugsweise in der Wärme und/oder gegebenenfalls bei verändertem Druck, in eine gröbere Form übergeführt werden.

Infolge der hervorragenden Hitzestabilität und der ausgezeichneten Lichtechtheit erweist sich die neue $\gamma$-Modifikation als besonders wertvolles blaustichiges Rotpigment zum Einfärben von Kunststoffen, im besonderen Polyolefinen, Polyamiden, Polyestern und Polyvinylchlorid, sowie von Lacken. Die erhaltenen gefärbten Fasern und Gegenstände weisen eine ausgezeichnete Lichtechtheit auf. Auch die textilen Echtheiten der gefärbten Fasern, beispielsweise Wasch-, Reib-, Thermofixier-, Chlor- und Trockenreinigungsechtheit sind hervorragend.

In den nachfolgenden Beispielen bedeuten die Teile, sofern nichts anderes angegeben, Gewichtsteile und die Prozente Gewichtsprozente, und die Temperaturen sind in Celsiusgraden angegeben.

Beispiel 1

19,6 Teile Perylentetracarbonsäuredianhydrid, 121 Teile 3,5-Dimethylanilin und 4 Teile Zink-Acetat · 2 H$_2$O werden zusammen in einem Rührgefäß auf 195 bis 205° erwärmt und so während einer Stunde unter gleichzeitigem Abdestillieren des Reaktionswassers verrührt. Man kühlt das Reaktionsgemisch auf 80°, verdünnt mit 150 ml Äthanol und filtriert die Pigmentsuspension nach 10minütigem Rühren ab. Der Preßkuchen wird mit 200 Vol.-Teilen Ethanol, dann mit verdünnter wässeriger Salzsäure amin- und Zn-salzfrei gewaschen und im Vakuumtrockenschrank bei ca. 80° getrocknet. Man erhält 28,5 Teile Perylentetracarbonsäure-bis-(3,5-dimethylphenyl)-imid in der neuen $\gamma$-Modifikation, welche eingearbeitet in HD-Polyethylen-Spritzgußartikel farbstarke blaustichigrote Färbungen mit ausgezeichneten Echtheiten ergibt.

## Beispiel 2

11,8 Teile Perylentetracarbonsäuredianhydrid, 90 Vol.-Teile 3,5-Dimethylanilin und 2,4 Teile Zinkformiat werden zusammen auf 195–200° erwärmt und während 6 Stunden bei dieser Temperatur verrührt. Man kühlt das Reaktionsgemisch auf 80° ab, verdünnt mit 50 Vol.-Teilen Isopropanol, filtriert ab und wäscht den Preßkuchen mit 250 Vol.-Teilen Isopropanol, danach amin- und zinksalzfrei mit verdünnter wässeriger Salzsäure und trocknet im Vakuumtrockenschrank bei 70–80°. Man erhält 16,5 Teile Perylentetracarbonsäure-bis-(3,5-dimethylphenyl)-imid in der neuen $\gamma$-Modifikation, welche, gegebenenfalls nach Überführung in ein Präparat, sich zur Massefärbung von Polyamid-, Polyester-, Polyacrylnitril- oder Polypropylenfasern eignet. Man erhält blaustichigrot gefärbte Fasern oder Gegenstände mit ausgezeichneten Licht- und textilen Echtheiten.

## Beispiel 3

Verfährt man analog wie in Beispiel 2 beschrieben, verwendet jedoch anstelle von 2,4 Teilen Zinkformiat, 2,4 Teile Cadmiumacetat · 2 H$_2$O und rührt das Reaktionsgemisch während 2 Stunden bei 195–200°, so erhält man 17 Teile Perylentetracarbonsäure-bis-(3,5-dimethylphenyl)-imid in der neuen $\gamma$-Modifikation mit ebensoguten Eigenschaften.

## Beispiel 4

20 Teile der gelbstichigroten $\alpha$-Modifikation von Perylentetracarbonsäure-bis-(3,5-dimethylphenyl)-imid werden in 160 Vol.-Teilen Trifluoressigsäure während 18 Stunden bei Rückflußtemperatur verrührt. Danach wird die Pigmentsuspension auf Raumtemperatur abgekühlt und unter Rühren in 440 Teile Wasser gegossen. Nach 15minütigem Rühren wird die Suspension abfiltriert, der Preßkuchen mit Wasser neutral gewaschen und dann im Vakuumtrockenschrank bei ca. 80° getrocknet. Man erhält 19,7 Teile Perylentetracarbonsäure-bis-(3,5-dimethylphenyl)-imid in der neuen $\gamma$-Modifikation, welche im Spritzguß in HD-Polyäthylen eingefärbt farbstarke blaustichigrote Färbungen mit ausgezeichneten Hitze- und Lichtechtheiten ergibt.

## Beispiel 5

20 Teile der gelbstichigroten $\alpha$-Modifikation werden in 200 Vol.-Teilen Toluol und 100 Vol.-Teilen Trifluoressigsäure während 18 Stunden bei Rückflußtemperatur verrührt. Die Pigmentsuspension wird danach auf 20 bis 30° abgekühlt und abfiltriert, der Preßkuchen gut mit Isopropanol gewaschen und im Vakuumtrockenschrank bei ca. 80° getrocknet. Man erhält 18 Teile Perylentetracarbonsäure-bis-(3,5-dimethylphenyl)-imid in der neuen $\gamma$-Modifikation, welche eingearbeitet in Weich-PVC-Walzfolien oder Hart-PVC blaustichigrote migrations- und lichtechte Färbungen ergibt.

## Beispiel 6

Eine Mischung von 1,0 Teil des nach Beispiel 1 erhaltenen Perylenpigmentes in der neuen $\gamma$-Modifikation, 1,0 Teil Antioxydant IRGANOX 1010 (Handelsname der CIBA-GEIGY AG) und 1000,0 Teilen Polyäthylen-HD Granulat Vestolen A 60 bis 16 (Handelsnahme der Firma Hüls) wird während 15 Minuten in einer Glasflasche auf einer Rollbank vorgemischt. Danach wird die Mischung in zwei Passagen auf einem Einwellenextruder extrudiert, das so erhaltene Granulat auf einer Spritzgußmaschine (Allround Aarburg 200) bei 220° zu Platten verspritzt und 5 Minuten bei 180° nachgepreßt. Die Preßplatten, welche weder Verzug noch Deformation zeigen, weisen farbstarke blaustichigrote Nuancen mit ausgezeichneten Echtheiten auf.

## Beispiel 7

Verwendet man anstelle von 1,0 Teil des reinen Tonerpigmentes 2,0 Teile eines 50%igen Pigmentpräparates, bestehend aus 1,0 Teil des nach dem Beispiel 2 erhaltenen Perylenpigmentes der neuen $\gamma$-Modifikation und 1,0 Teil Mg-Behenat, verfährt sonst nach der in Beispiel 4 beschriebenen Weise, so erhält man blaustichigrote Preßplatten mit ebenso guten Eigenschaften.

### Beispiel 8

1000 Teile Polypropylengranulat (Daplen PT 55, Handelsname der Firma Chemie Linz) und 20 Teile eines 50%igen Pigmentpräparates, bestehend aus 10 Teilen des nach Beispiel 3 erhaltenen Perylenpigmentes der neuen $\gamma$-Modifikation und 10 Teilen Mg-Behenat, werden in einer Mischtrommel intensiv vermischt. Das so behandelte Granulat wird bei 280 bis 285° nach dem Schmelzspinnverfahren versponnen. Man erhält stark blaustichigrot gefärbte Fasern mit sehr guten Licht- und textilen Echtheiten.

### Beispiel 9

Für die Färbung von PVC wird eine Mischung von 65 Teilen stabilisiertem PVC, 35 Teilen Dioctylphthalat, 0,2 Teilen des nach den Beispielen 1 bis 3 hergestellten Perylenpigmentes der neuen $\gamma$-Modifikation hergestellt und zwischen zwei Rollen eines Kalanders bei ca. 150° während 5 Minuten hin- und herbewegt. Die so erhaltene Weich-PVC-Folie weist eine blaustichigrote Färbung mit ausgezeichneten Lichtechtheiten auf.

### Beispiel 10

Eine Mischung von 130 Teilen Steatitkugeln $\varnothing$ 8 mm, 47,5 Teilen Alkydmelamineinbrennlack, bestehend aus 60 Teilen Beckosol 27-320, 60% in Xylol (Reichhold Chemie AG), 36 Teilen Super-Beckamin 13-501, 50% (Reichhold Chemie AG), 2 Teilen Xylol und 2 Teilen Äthylenglykolmonomethyläther und 2,5 Teilen des nach Beispiel 1 erhaltenen Perylenpigmentes der neuen $\gamma$-Modifikation wird in einer 200 ml Glasflasche mit Twist-off-Verschluß während 120 Stunden auf einem Rollgestell dispergiert. Nach Abtrennen der Steatitkugeln werden 2,4 Teile der so dispergierten Volltonmischung, 6,0 Teile Titandioxid Kronos RN 59 (Kronos Titan GmbH), und 24,0 Teile des obigen Alkydmelamineinbrennlacks vermischt, auf Aluminiumbleche gespritzt und anschließend während 30 Minuten bei 130° eingebrannt. Man erhält blaustichigrote Färbungen mit ausgezeichneten Echtheiten.

### Beispiel 11

Verfährt man analog wie in Beispiel 8 beschrieben, verwendet jedoch anstelle von Polypropylengranulat, 1000 Teile Polyamidgranulat (Grilon A 25, Handelsname der Firma Emserwerke), so erhält man blaustichigrot gefärbte Polyamidfasern mit sehr guten Licht- und textilen Echtheiten.

### Beispiel 12

1000 Teile Polyäthylenterephthalatgranulat (Terlenka glänzend, Handelsname der Firma ENKA) und 10 Teile des nach Beispiel 1 hergestellten Perylenpigmentes der neuen $\gamma$-Modifikation werden in einer Mischtrommel intensiv vermischt und danach während 24 Stunden bei ca. 100° am Vakuum bei 15 mm Hg getrocknet. Das so behandelte Granulat wird bei ca. 290° nach dem Schmelzspinnverfahren versponnen. Man erhält blaustichigrot gefärbte Fasern mit ausgezeichneten Licht- und textilen Echtheiten.

### Beispiel 13

3 Teile des nach Beispiel 1 erhaltenen Perylenpigmentes der neuen $\gamma$-Modifikation werden in feinpräparierter Form in eine Spinnlösung von 300 Teilen Polyacrylnitril (Leacryl 16, Handelsname der Firma Montefibre) in 700 Teilen Dimethylformamid eingerührt und nach dem Trockenspinnverfahren versponnen. Man erhält blaustichigrote Polyacrylnitrilfasern, welche ausgezeichnete Licht- und textile Echtheiten aufweisen.

## Patentansprüche

1. Perylentetracarbonsäure-bis-(3,5-dimethylphenyl)-imid in einer neuen $\gamma$-Modifikation gekennzeichnet durch ein Röntgenbeugungsspektrum, das bei Netzebenen-Abständen von 8,3, 3,61, 3,46 und 3,30 Å sehr starke, und bei Netzebenen-Abständen von 17,2, 10,3, 7,2, 6,7 und 4,09 starke Linien aufweist.

2. Perylentetracarbonsäure-bis-(3,5-dimethylphenyl)-imid gemäß Anspruch 1, das bei Netzebenen-abständen von 17,2 und 10,3 Å Linien starker, bei 9,8 Å eine Linie mittlerer, bei 8,3 Å eine Linie sehr starker, bei 7,2 und 6,7 Å Linien starker, bei 6,2 und 6,1 Å Linien sehr schwacher, bei 5,55 Å eine Linie mittlerer, bei 5,29 Å eine Linie schwacher, bei 5,09 Å eine Linie mittlerer, bei 4,83 Å eine Linie sehr schwacher, bei 4,64, 4,49, 4,34 und 4,27 Å Linien schwacher, bei 4,09 Å eine Linie starker, bei 3,90 und 3,84 Å Linien mittlerer, bei 3,74 Å eine Linie schwacher, bei 3,61 Å eine Linie sehr starker, bei 3,54 Å eine Linie schwacher, bei 3,46 Å eine Linie sehr starker, bei 3,38 Å eine Linie sehr schwacher, bei 3,30 Å eine Linie sehr starker, bei 3,21 Å eine Linie mittlerer, bei 3,16, 3,10 und 3,04 Å Linien sehr schwacher Intensität aufweist.

3. Verfahren zur Herstellung der neuen $\gamma$-Modifikation gemäß Anspruch 1, durch Kondensation des Perylentetracarbonsäuredianhydrides mit 3,5-Dimethylanilin, dadurch gekennzeichnet, daß man die Kondensation ohne inertes organisches Lösungsmittel in einem Überschuß an 3,5-Dimethylanilin und in Gegenwart eines Cadmium- oder Zinksalzes einer organischen Säure durchführt.

4. Verfahren gemäß Anspruch 3, dadurch gekennzeichnet, daß man als Zinksalz Zinkacetat oder -formiat verwendet.

5. Verfahren zur Herstellung der neuen $\gamma$-Modifikation gemäß Anspruch 1, dadurch gekennzeichnet, daß man die bekannte $\alpha$- und/oder $\beta$-Form mit Trifluoressigsäure behandelt.

6. Verfahren zur Herstellung der neuen $\gamma$-Modifikation gemäß Anspruch 1, dadurch gekennzeichnet, daß man eine Suspension der $\alpha$- und/oder $\beta$-Modifikation in Trifluoressigsäure einige Stunden verrührt.

7. Verfahren zur Herstellung der neuen $\gamma$-Modifikation gemäß Anspruch 1, dadurch gekennzeichnet, daß man eine Suspension der $\alpha$- und/oder $\beta$-Modifikation in einem Gemisch, bestehend aus Trifluoressigsäure und einem aprotischen organischen Lösungsmittel, einige Stunden verrührt.

8. Verwendung der neuen $\gamma$-Modifikation gemäß Anspruch 1 zum Pigmentieren von hochmolekularem organischem Material.

9. Hochmolekulares organisches Material enthaltend die $\gamma$-Modifikation gemäß Anspruch 1.

## Claims

1. Perylenetetracarboxylic acid-bis-(3,5-dimethylphenyl)-imide in a novel $\gamma$-modification which is characterised by an X-ray diffraction spectrum exhibiting very strong lines at interplanar spacings of 8.3, 3.61, 3.46 and 3.30 Å, and strong lines at interplanar spacings of 17.2, 10.3, 7.2, 6.7 and 4.09 Å.

2. Perylenetetracarboxylic acid-bis-(3,5-dimethylphenyl)-imide according to Claim 1, which exhibits lines of strong intensity at interplanar spacings of 17.2 and 10.3 Å, a line of medium intensity at 9.8 Å, a line of very strong intensity at 8.3 Å, lines of strong intensity at 7.2 and 6.7 Å, lines of very weak intensity at 6.2 and 6.1 Å, a line of medium intensity at 5.55 Å, a line of weak intensity at 5.29 Å, a line of medium intensity at 5.09 Å, a line of very weak intensity at 4.83 Å, lines of weak intensity at 4.64, 4.49, 4.34 and 4.27 Å, a line of strong intensity at 4.09 Å, lines of medium intensity at 3.90 and 3.84 Å, a line of weak intensity at 3.74 Å, a line of very strong intensity at 3.61 Å, a line of weak intensity at 3.54 Å, a line of very strong intensity at 3.46 Å, a line of very weak intensity at 3.38 Å, a line of very strong intensity at 3.30 Å, a line of medium intensity at 3.21 Å, and lines of very weak intensity at 3.16, 3.10 and 3.04 Å.

3. A process for producing the novel $\gamma$-modification according to Claim 1 by condensation of perylenetetracarboxylic acid dianhydride with 3,5-dimethylaniline, in which process the condensation reaction is performed without an inert organic solvent, in an excess of 3,5-dimethylaniline and in the presence of a cadmium or zinc salt of an organic acid.

4. A process according to Claim 3, wherein the zinc salt used is zinc acetate or zinc formiate.

5. A process for producing the novel $\gamma$-modification according to Claim 1, wherein the known $\alpha$- and/or $\beta$-form is treated with trifluoroacetic acid.

6. A process for producing the novel $\gamma$-modification according to Claim 1, wherein a suspension of the $\alpha$- and/or $\beta$-modification is stirred up for a few hours in trifluoroacetic acid.

7. A process for producing the novel $\gamma$-modification according to Claim 1, wherein a suspension of the $\alpha$- and/or $\beta$-modification is stirred up for a few hours in a mixture consisting of trifluoroacetic acid and an aprotic organic solvent.

8. Use of the novel $\gamma$-modification according to Claim 1 for pigmenting high-molecular organic material.

9. High-molecular organic material containing the $\gamma$-modification according to Claim 1.

## Revendications

1. Bis-(3,5-diméthylphényl)-imide de l'acide pérylène-tétracarboxylique sous une nouvelle modification $\gamma$ caractérisée par un spectre de diffraction de rayons X présentant des lignes à très forte intensité pour les distance entre plans réticulaires de 8,3, 3,61, 3,46 et 3,30 Å, et des lignes à forte intensité pour les distances entre plans réticulaires de 17,2, 10,3, 7,2, 6,7 et 4,09 Å.

2. Modification selon la revendication 1, qui, pour les distances entre plans réticulaires de 17,2 et 10,3 Å, présente des lignes de forte intensité, de 9,8 Å une ligne d'intensité moyenne, de 8,3 Å une ligne de très forte intensité, de 7,2 et 6,7 Å des lignes de forte intensité, de 6,2 et 6,1 Å des lignes de très faible intensité, de 5,55 Å une ligne d'intensité moyenne, de 5,29 Å une ligne de faible intensité, de 5,09 Å une ligne d'intensité moyenne, de 4,83 Å une ligne de très faible intensité, de 4,64, 4,49, 4,34 et 4,27 Å des lignes de faible intensité, de 4,09 Å une ligne de forte intensité, de 3,90 et 3,84 Å des lignes d'intensité moyenne, de 3,74 Å une ligne de faible intensité, de 3,61 Å une ligne de très forte intensité, de 3,54 Å une ligne de faible intensité, de 3,46 Å une ligne de très forte intensité, de 3,38 Å une ligne de très faible intensité, de 3,30 Å une ligne de très forte intensité, de 3,21 Å une ligne d'intensité moyenne et de 3,16, 3,10 et 3,04 Å des lignes de très faible intensité.

3. Procédé de préparation de la nouvelle modification $\gamma$ selon la revendication 1 ou 2, par condensation du dianhydride de l'acide pérylène-tétracarboxylique avec la 3,5 diméthylaniline, procédé caractérisé en ce que l'on effectue la condensation sans solvant organique inerte dans un excès de 3,5-diméthylaniline, en présence d'une sel de cadmium ou de zinc d'un acide organique.

4. Procédé selon la revendication 3, caractérisé en ce qu'on utilise comme sel de zinc l'acétate ou le formiate.

5. Procédé de préparation de la modification $\gamma$ selon la revendication 1 ou 2, caractérisé en ce que l'on traite avec de l'acide trifluoroacétique la forme connue $\alpha$ et/ou $\beta$.

6. Procédé de préparation de la modification $\gamma$ selon la revendication 1 ou 2, caractérisé en ce que l'on agite pendant quelques heures une suspension de la modification $\alpha$ et/ou $\beta$ dans de l'acide trifluoro acétique.

7. Procédé de préparation de la modification $\gamma$ selon la revendication 1 ou 2, caractérisé en ce que l'on agite pendant quelques heures une suspension de la modification $\alpha$ et/ou $\beta$ dans un mélange d'acide trifluoroacétique et d'un solvant organique aprotique.

8. Utilisation de la modification $\gamma$ selon la revendication 1 ou 2 pour pigmenter des matières organiques macromoléculaires.

9. Matières organiques macromoléculaires contenant la modification $\gamma$ selon la revendication 1 ou 2.